# EUROPEAN PATENT SPECIFICATION

(11) **EP 0 633 647 B1**
(45) Date of publication and mention of the grant of the patent: **20.11.1996**
(21) Application number: 94101713.9
(22) Date of filing: 04.02.1994
(51) Int. Cl.: H02K 5/24, H02K 9/02, F16F 1/36

(54) **Resin molded electric motor with rubber vibration isolator**
In Harz gegossenen elektrischen Motor mit Vibrationsisolator aus Gummi
Moteur électrique moulé en résine avec un amortisseur de vibrations en caoutchouc

(30) Priority: 13.05.1993 JP 111396/93
(43) Date of publication of application: 11.01.1995
(73) Proprietor: HITACHI, LTD., Chiyoda-ku, Tokyo 100 (JP); HITACHI TAGA ENGINEERING, LTD., Hitachi-shi Ibaraki 316 (JP)
(72) Inventor: Higuchi, Noboru, Hitachi-shi (JP); Fujita, Katsutoshi, Hitachi-shi (JP); Sakai, Takayuki, Naka-gun, Ibaraki-ken (JP)
(74) Representative: Altenburg, Udo, Dipl.-Phys.

(56) References cited:
- DE-A- 2 219 182
- FR-A- 2 586 772
- GB-A- 770 102
- PATENT ABSTRACTS OF JAPAN vol. 12, no. 337 (E-657) 12 September 1988 & JP-A-63 099 739 (MATSUSHITA ELECTRIC IND. CO.) 2 May 1988
- PATENT ABSTRACTS OF JAPAN vol. 14, no. 387 (E-0967) 21 August 1990 & JP-A-02 142 337 (HITACHI LTD.) 31 May 1990

## Description

### FIELD OF THE INVENTION AND RELATED ART STATEMENT

The present invention relates to an electric motor, and more particularly to an electric motor in which vent holes are provided in a bracket and a rubber vibration isolator, so that the temperatures at various portions of the electric motor, such as motor coils and bearing portions, are reduced, and the temperatures of the rubber vibration isolators are reduced to suppress thermal hardening of the rubber, thereby improving the duration of the vibration transmission prevention effect in the electric motor.

The upper limits of the temperature rise in various portions of an electric motor are prescribed with regulations, and it is required to suppress a thermal hardening of the rubber vibration isolator so that a durability of vibration transmission prevention effect in the electric motor is kept. Therefore, it is required to further reduce the temperature.

The countermeasures are disclosed in Japanese Patent Laid-open Publication Nos. 63-99739 and 2-142337.

Namely, Japanese Patent Laid-open Publication No. 63-99739 discloses that two types of windows, one for suction and the other for discharge, are provided in an end bracket so as to reduce the temperature of the bearing portion. It can be considered that the temperature reduction in the bearing portion causes to reduce a thermal transmission to the rubber vibration isolator. However, Japanese Patent Laid-open Publication No. 63-99739 does not refer to such effect. Japanese Patent Laid-open Publication No. 2-142337 discloses that a bracket is so disposed that a side surface of the bracket is not in contact with a side surface of the rubber vibration isolator opposing the bracket side surface, but does not refer to the durability of vibration isolation effect and the temperature reduction.

Thus, no proposals has been made as to counter-measures for reducing temperatures at various portions of an electric motor and for improving a durability of vibration damping effect by means of suppressing thermal hardening of the rubber vibration isolator.

### OBJECT AND SUMMARY OF THE INVENTION

The problems are left unsolved by the prior arts, such as the reduction of temperatures in various portions of an electric motor and the improvement in durability of vibration damping effect by means of suppressing thermal hardening of the rubber vibration isolator. Accordingly, an object of the present invention is to solve these problems.

In order to solve the above-described problems, according to the present invention, there is provided a resin molded electric motor with rubber vibration isolators each provided on an outer periphery of a bearing holding portion of the respective brackets , characterized in that vent holes are formed in said brackets and said rubber vibration isolators, and said vent holes extend from an opposing surface of each of said brackets towards the opposite surface thereof so as to penetrate said brackets and extend from an opposing surface of each of said rubber vibration isolators towards the opposite surface thereof so as to penetrate said rubber vibration isolators.

In this manner, said vent holes are formed in a side surface of each bracket of an electric motor and in a surface of rubber vibration isolator opposing the bracket side surface, so that heat generated in the electric motor is carried away outside of the electric motor through these vent holes, thereby reducing temperatures at various portions of the electric motor, as well as the temperature of the rubber vibration isolator.

Since the temperature outside of the electric motor is lower than that inside of the electric motor, a convection of air is so formed that the heat is carried away from the inside of the electric motor to the outside of the electric motor through the vent holes formed in the brackets and the rubber vibration isolators.

According to this, temperatures in the coils, the bearing portions and the rubber vibration isolators are reduced. Further, the surface area of each rubber vibration isolator is increased as a result of formation of the vent holes in the rubber vibration isolator. This means that the heat dissipation area is increased. The heat transmitted to the rubber vibration isolator can be readily dissipated, thereby greatly contributing to further reduction in the temperature.

Apart from this, rubber is generally hardened when heated. The hardened rubber deteriorates a vibration damping effect. Therefore, as describe above, the hardening due to heating is suppressed by means of reduction in the temperature of the rubber vibration isolator, thereby offering prolonged duration of the vibration damping effect of the electric motor.

### BRIEF DESCRIPTION OF THE DRAWINGS

Fig. 1 is a partial sectional side view of an embodiment of the present invention,
Fig. 2 is a front view of an embodiment of the present invention,
Fig. 3 is a fragmentary enlarged sectional view of the embodiment of the present invention, and
Fig. 4 is a fragmentary enlarged sectional view of another embodiment of the present invention.

### DETAILED DESCRIPTION OF PREFERRED EMBODIMENTS

The embodiments of the present invention will be described with reference to the drawings.

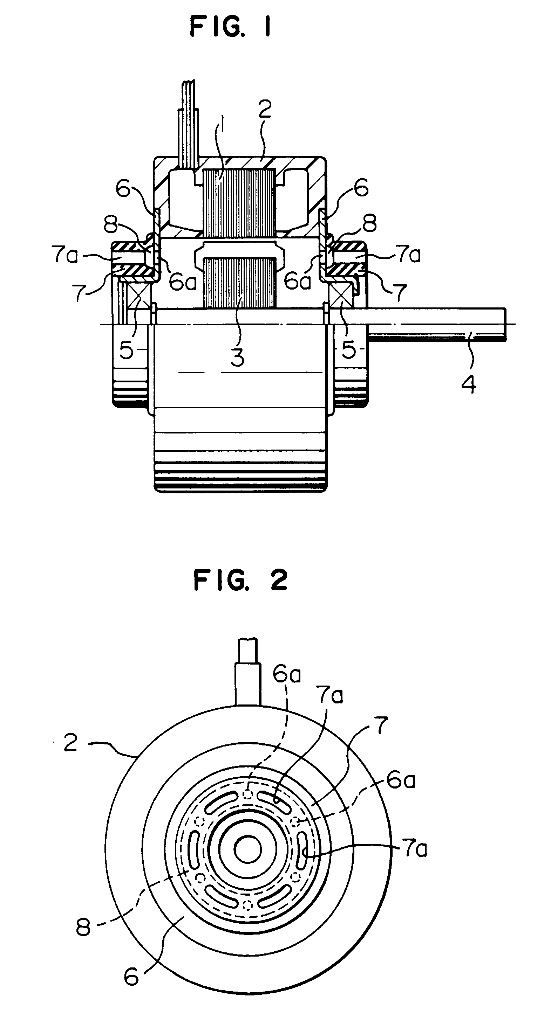

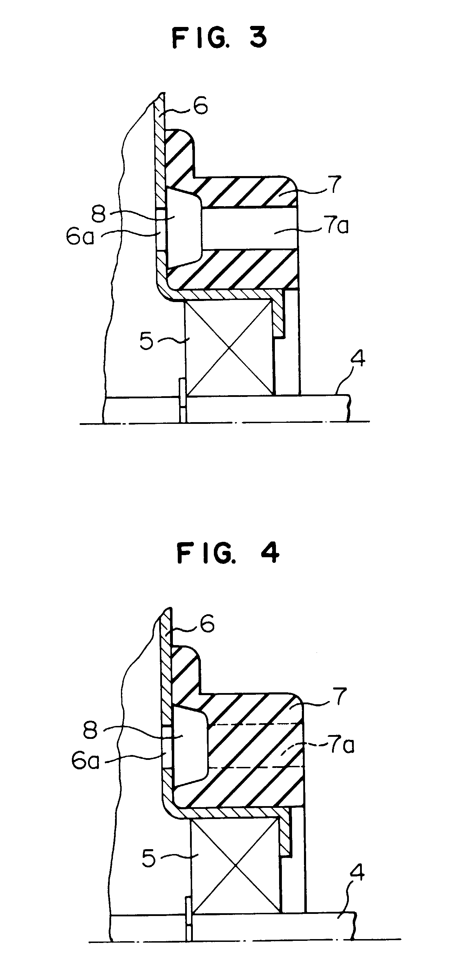

Fig. 1 is a partial sectional side view of a resin molded electric motor having rubber vibration isolators, Fig. 2 is a front view of the electric motor, and Figs. 3 and 4 are fragmentary enlarged sectional view of bearing portions.

A stator 1 in which an enameled wire is wound around a stator core is integrally molded with a resin molding 2. The resin mold 2 forms an outer frame.

A shaft 4 fixedly carries a rotor 3 and is supported by bearings 5 which are rotatably held by brackets 6. A rubber vibration isolator 7 is provided on an outer periphery of a portion of each bracket 6, which supports the bearing 5. The rubber vibration isolator 7 provides a vibration damping effect to prevent the transmission of vibration generated from the motor.

Vent holes 6a and 7a are formed in the brackets 6 and the rubber vibration isolators 7 so as to extend from their opposing surfaces to the opposite surfaces thereof. Further, a vent passage 8 is provided between the bracket 6 and the opposing surface of the rubber vibration isolator 7, which consists of an annular space formed in the rubber vibration isolator 7 to allow air to flow therethrough.

Heat generated in the stator 1 is transmitted to the resin mold 2 and to the brackets 6, the rubber vibration isolators 7, the rotor 3 and the shaft 4.

The heat transmitted from the stator 1 is dissipated to the air, but the heat which could not be dissipated raises temperatures at various portions of the electric motor.

Since the temperature around the electric motor is lower than that in the electric motor, an air convection is generated in which air is drawn out of the electric motor through the vent holes 6a and 7a formed in the bracket 6 and the rubber vibration isolators 7, so that the interior temperature in the electric motor can be reduced, thereby lowering temperatures of the coils and the bearings 5 of the electric motor.

The reduction in the temperature of the coils of the electric motor causes a reduction in the temperature of the brackets 6 which are in contact with the resin mold 2 as well as a reduction in the temperature of the rubber vibration isolators 7 which are mounted around the portions of the brackets 6 which support the bearings 5.

The surface area of each rubber vibration isolator 7 is increased as a result of formation of the vent holes 7a in the rubber vibration isolator 7. This means that the heat dissipation area is increased. The heat transmitted to the rubber vibration isolator 7 can be readily dissipated, thereby greatly contributing to further reduction in the temperature.

Apart from this, rubber is generally hardened when heated. The hardened rubber deteriorates a vibration damping effect. In the embodiment of the present invention, the hardening due to heating is suppressed by means of reduction in the temperature of the rubber vibration isolator 7, thereby offering prolonged duration of the vibration damping effect of the electric motor.

Regarding the positional relationship between the vent holes 6a in the bracket 6 and the vent holes 7a in the rubber vibration isolator 7, an air communication therebetween is facilitated when these vent holes 6a and 7a are aligned as shown in Fig. 3. The heat discharge from the interior of the electric motor to the exterior of the electric motor is impaired when the vent holes 6a of the bracket 6 and the vent holes 7a of the rubber vibration isolator 7 are disaligned as shown in Figs. 2 and 4. However, the vent passage 8 consisting of an annular space along which air can flow is provided in the surface of the rubber vibration isolator 7 facing the bracket 6. Accordingly, the heat in the electric motor can be discharged outside of electric motor from the vent holes 7a through the vent passage 8 in the rubber vibration isolator 7 and the vent holes 6a of the bracket 6. By virtue of provision of the vent passage 8, reduction in the temperature can be readily attained without paying specific attention to positioning between the vent holes 6a of the bracket 6 and the vent holes 7a of the rubber vibration isolator 7 in the assembling thereof.

As described above, the reduction in the temperature at various portions of the electric motor and the improvement of duration of vibration damping effect of the rubber vibration isolator can be obtained without paying specific attention in the assembling operation.

As described above, according to the present invention, the reduction in the temperature at various portions of the electric motor prolongs a heat resistance life of the electric motor itself and improves the duration of vibration damping effect of the rubber vibration isolator, thereby improving a reliability thereof. In addition, the above-mentioned effects can be obtained without paying specific attention to the positioning between the vent holes in the bracket and the rubber vibration isolator. Therefore, a great advantages can be obtained in economy and in quality.

## Claims

1. A resin molded electric motor with rubber vibration isolators (7) each provided on an outer periphery of a bearing holding portion of the respective brackets (6), characterized in that vent holes (6a, 7a) are formed in said brackets and said rubber vibration isolators, and said vent holes extend from an opposing surface of each of said brackets towards the opposite surface thereof so as to penetrate said brackets and extend from an opposing surface of each of said rubber vibration isolators (7) towards the opposite surface thereof so as to penetrate said rubber vibration isolators (7).

2. A resin molded electric motor with rubber vibration isolators (7) according to Claim 1, wherein a vent passage (8) is provided between the opposing surfaces of said bracket and said rubber vibration isolator, and said vent passage (8) consists of a space along which air can flow.

## Patentansprüche

1. Harzvergossener Elektromotor mit Gummivibrationsisolatoren (7), von denen jeder an einer äußeren Peripherie eines Lagerhalteabschnittes der entsprechenden Flansche (6) angebracht ist, dadurch gekennzeichnet, daß Belüftungslöcher (6a, 7a) in den Klammerflanschen und den Gummivibrationsisolatoren gebildet sind, und daß sich die Belüftungslöcher von einer gegenüberliegenden Oberfläche jedes Klammerflansches aus in Richtung zu der gegenüberliegenden Oberfläche desselben erstrecken, derart, daß sie die Klammerflansche durchdringen und sich von einer gegengerichteten Oberfläche jedes der Gummivibrationsisolatoren (7) aus zur gegenüberliegenden Oberfläche in der Weise erstrecken, daß sie die Gummivibrationsisolatoren (7) durchdringen.

2. Harzvergossener Elektromotor mit Gummivibrationsisolatoren (7) gemäß Anspruch 1, bei dem ein Belüftungskanal (8) zwischen den einander gegenüberliegenden Oberflächen des Klammerflansches und des Gummivibrationsisolators vorgesehen ist, und bei dem der Belüftungskanal (8) aus einem Raum besteht, entlang dessen Luft strömen kann.

## Revendications

1. Moteur électrique en résine moulée avec des isolateurs (7) de vibrations en caoutchouc disposés chacun sur le pourtour extérieur d'une partie des supports (6) servant respectivement au montage de paliers, caractérisé en ce que des trous d'aération (6a, 7a) sont formés dans lesdits supports et lesdits isolateurs de vibrations en caoutchouc, et lesdits trous d'aération s'étendent depuis une surface, située en regard de chacun desdits supports vers la surface opposée de ceux-ci, de façon à pénétrer dans lesdits supports, et s'étendent depuis une surface, située en regard de chacun desdits isolateurs (7) de vibrations en caoutchouc vers la surface opposée de ceux-ci, de façon à pénétrer dans lesdits isolateurs (7) de vibrations en caoutchouc.

2. Moteur électrique en résine moulée avec des isolateurs (7) de vibrations en caoutchouc selon la revendication 1, dans lequel un passage d'aération (8) est ménagé entre les surfaces opposées dudit support et dudit isolateur de vibrations en caoutchouc, et ledit passage d'aération (8) est constitué par un espace par lequel peut passer de l'air.
